# EUROPEAN PATENT SPECIFICATION

(11) **EP 2 283 653 B1**
(45) Date of publication and mention of the grant of the patent: **17.08.2016**
(21) Application number: 09739477.9
(22) Date of filing: 23.04.2009
(51) Int. Cl.: H04L 29/08, H04N 21/239, H04N 21/24, H04N 21/6338, H04N 21/6402, H04W 28/16, H04W 72/04, H04L 12/801, H04N 7/173

(54) **SYSTEMS, METHODS AND APPARATUS FOR DEMOCRATIC ALLOCATION OF BANDWIDTH**
SYSTEME, VERFAHREN UND VORRICHTUNGEN ZUR DEMOKRATISCHEN BANDBREITENZUORDNUNG
SYSTÈMES, PROCÉDÉS ET APPAREIL POUR L ALLOCATION DÉMOCRATIQUE DE BANDE PASSANTE

(30) Priority: 30.04.2008 US 112920
(43) Date of publication of application: 16.02.2011
(73) Proprietor: Echostar Technologies L.L.C., Englewood, CO 80112 (US)
(72) Inventor: CASAGRANDE, Steven, M., Castle Rock CO 80108 (US)
(74) Representative: Sadler, Peter Frederick
(86) International application number: PCT/US2009/041568
(87) International publication number: WO 2009/134675

(56) References cited:
- TW-B- 242 379
- US-A1- 2005 089 035
- US-B1- 6 909 726
- US-B1- 7 260 601
- MUKESH AGRAWAL, AMIT MANJHI, NIKHIL BANSAL, SRINIVASAN SESHAN: "Improving Web Performance in Broadcast-Unicast Networks" April 2003 (2003-04), IEEE INFOCOM 2003 , XP002541070 paragraph [0001] - paragraph [0004]

## Description

### Background

In the past, many content providers, such as television stations, cable companies and direct broadcast satellite providers were only able to offer content to users on a broadcast schedule. Content was selected in advance that was likely to appeal to the largest number of users and broadcast during a specific period of time. This technique limited consumer choices on both the time for viewing content as well as the particular content that users could view. Video on-demand developed to allow content providers to provide a wider range of content choices to users. Additionally, users may start watching content on their own schedule rather than a schedule dictated by a content provider.

On-demand content is often provided to an entertainment device, such as a cable or satellite set-top box, over a communication medium that is distinct from the communication medium or pathway used to provide "broadcast" content. For example, a satellite receiver set-top box may receive "broadcast" content from a satellite, whereas the set-top box may receive "on-demand" content over an internet connection. In a file based video on-demand system, a set-top box downloads content from a content provider (e.g., over the internet) and stores the content for playback to a user upon request. One problem with file based video on-demand is that an internet connection may have significantly less bandwidth than a satellite connection for an individual connection. Thus, more time may be required to provide "on-demand" content to a set-top box over an internet connection compared with using a larger bandwidth satellite connection to provide the same "on-demand" content. However, the total bandwidth of the satellite is limited and it is not economical to transmit "on-demand" content over the satellite connection responsive to each user request. In other words, providing satellite bandwidth for a single user is not economical, but setting a scheduled time in advance for a broadcast of the content over the satellite eliminates the advantages of an on-demand system.

US Patent document US 7260601 describes a video distribution system in which a receiving device receives content in one of a plurality of communication modes, including unicast and broadcast modes. This document describes using a high distribution channel for transferring programs with large audience sizes and a low distribution channel for transferring programs with small audience sizes.

### Brief Description of the Drawings

The same number represents the same element or same type of element in all drawings.
FIG. 1 illustrates an embodiment of a communication system.
FIG. 2 illustrates an embodiment of the entertainment device of FIG. 1.
FIG. 3 illustrates an embodiment of the content source of FIG. 1.
FIG. 4 illustrates an embodiment of a satellite broadcast system.
FIG. 5 illustrates an embodiment of a table illustrating the number of users accessing each movie of the catalog of the content source of FIG. 4.
FIG. 6 illustrates another embodiment of a table illustrating the number of users accessing each movie of the catalog of the content sources of FIG. 4.
FIG. 7 illustrates an embodiment of a cable television distribution system.
FIG. 8 illustrates an embodiment of an over-the-air television distribution system.
FIG. 9 illustrates an embodiment of a process for providing content to an entertainment device.

### Detailed Description

The various embodiments described herein generally provide apparatus, systems and methods which facilitate the reception, processing, outputting and communication of content from one or more sources, via one or more communication mediums (or networks), to one or more communication devices for presentation to one or more end-users. More particularly, the various embodiments described herein dynamically provide content over a high-bandwidth connection responsive to the user requests. In at least one embodiment, the content transmitted over the high-bandwidth connection is determined based on the number of users desiring to access the content. In effect, users can "vote" for the particular content that they desire to access over the high-bandwidth connection. A content source then allocates portions of the high-bandwidth connection for transmission of a variety of content based on voting by the users. Content that is not selected for transmission over the high-bandwidth connection may still be transmitted to a user over the low-bandwidth connection. In short, the various embodiments described herein provide democratic allocation of high-bandwidth connections for transmission of content based on user requests.

In at least one embodiment, the content to be received, processed, outputted and/or communicated may come in any of various forms including, but not limited to, audio, video, data, information, or otherwise. It is to be appreciated that the content may be supplied by any source and transmitted over any type of transmission network, such as an over-the-air broadcast, a satellite or cable television distribution system, the internet or other communication networks and the like.

In various embodiments described herein, viewers can select to access content from a large catalog of available content. A content source initially provides downloading of the content to a user device over a low-bandwidth connection, such as an internet protocol (IP) connection. For example, the user device may begin downloading a movie from the content source. The content source tabulates the number of users (e.g., "the votes") accessing the content over the low-bandwidth connection. If bandwidth becomes available on the high-bandwidth connection, then the content source may select the content receiving the greatest number of votes for transmission over the high-bandwidth connection. The client device may then begin downloading the content over the high-bandwidth connection rather than the low-bandwidth connection, resulting in a faster completion of the download for the user.

While the terms low-bandwidth and high-bandwidth connections are used herein, it is to be appreciated that the terms are not to be construed as limited to any particular transmission speed. For example, in some embodiments a low-bandwidth, connection may be a cable broadband connection that is relatively slower than a satellite transmission connection (e.g., a high-bandwidth connection). However, in other embodiments, a cable broadband connection may be a high-bandwidth connection relative to other slower connections, such as a digital subscriber line (DSL) connection. Thus, it is to be appreciated that the terms low-bandwidth and high-bandwidth connection are to be construed relative to each other in a particular embodiment depending on the relative bandwidth capacities and speeds of each communication pathway.

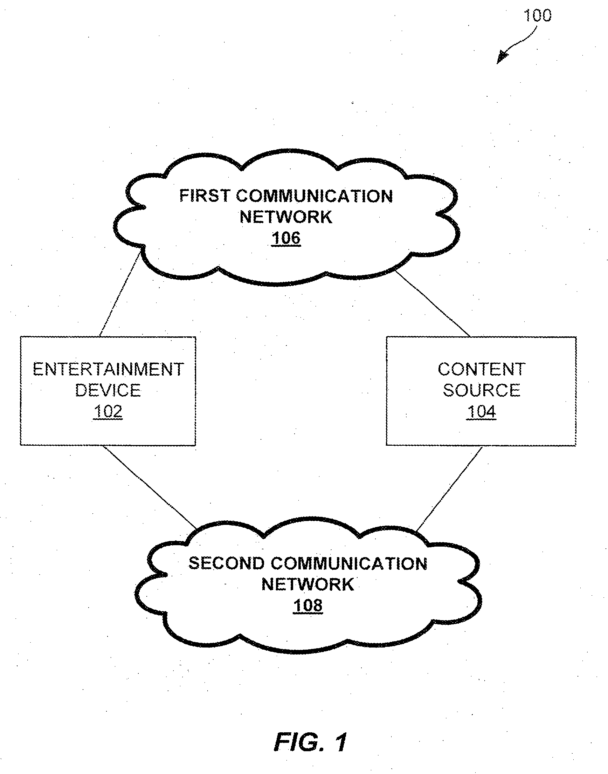

F1G. 1 illustrates an embodiment of a communication system 100. The communication system 100 includes an entertainment device 102, a content source 104, a first communication network 106 and a second communication network 108. Each of these components is discussed in greater detail below. In at least one embodiment, the content presented to the user by the entertainment device 102 includes an audio/video (A/V) stream, such as a television program or movie, on-demand video or other transmitted content and the like.

The entertainment device 102 is configured to receive content from one or more content sources (s) 104, and to output the content for presentation to a user on a presentation device. Examples of entertainment devices 102 include, but are hot limited to, televisions, television receivers (also known as set-top boxes), computers, personal digital assistants (PDAs), other computing devices, and/or mobile communication devices (e.g., mobile or wireless telephones). The entertainment device 1.02 may provide for receive capability only (e.g., televisions and stereo systems) or receive and transmit capabilities (e.g., television receivers, wireless telephones, wired telephones, computers, two-way radios, and WiFi PDAs).

In at least one embodiment, the entertainment device 102 is a television receiver configured to output content for presentation to a user. The entertainment device 102 may receive a video stream in any format (e.g., analog or digital format), and output the video stream for presentation to the user. In various embodiments, the entertainment device 102 may be integrated within a presentation device, such as a television, computer, stereo, mobile communication device and the like.

It is to be appreciated that the communication system 100 may include any number of entertainment devices 102 presenting content to any number of users. Each entertainment device 102 may receive the same or different content from the content source 104 than other entertainment devices 102. For example, several entertainment devices 102 may receive a first movie from the content source 104, while other entertainment devices 102 may receive a second movie from the content source 104.

The content source 104 is operable for receiving, generating and communicating content to one or more entertainment devices 102. In at least one embodiment, the content source 104 is operable for receiving various forms and types of content from other sources, aggregating the content and transmitting the content to the entertainment device 102. It is to be appreciated that the content source 104 may receive practically any form and/or type of information from one or more sources including streaming television programming, recorded audio or video, electronic programming guide data and the like. Exemplary content sources 104 include television distribution systems (e.g., over-the-air transmission facilities, cable television distribution head-ends and satellite television uplink centers), broadband or internet servers and the like. Further, the content source 104 may comprise any system or combination of systems that cooperatively operate to provide a catalog of content for access by the entertainment device 102. For example, the content source 104 may include a web server and a broadcast television system that provide content to the entertainment device 102 over multiple communication paths.

The entertainment device 102 and the content source 104 may be communicatively coupled through one or more communication networks 106 and 108. Thus, the entertainment device 102 may receive content from the content source 104 through multiple transmission paths. The first communication network 106 and the second communication network 108 may be any type of wired or wireless communication network. Each communication network 106 and 108 may utilize any desired combination of wired (e.g., cable and fiber) and/or wireless (e.g., cellular, satellite, microwave, and radio frequency) communication mediums and any desired network topology (or topologies when multiple mediums are utilized). Exemplary communication networks include television distribution networks (e.g., satellite and cable television networks), wireless communication networks, public switched telephone networks (PSTN), and local area networks (LAN) or wide area networks (WAN) providing data communication services.

In various embodiments, the second communication network 108 has a lager bandwidth for transmitting content to the entertainment device 102 than the first communication network 106. In at least one embodiment, the first communication network 106 provides a unicast of content to the entertainment device 102, whereas the second communication network 108 provides a multi-cast or broadcast of the content to the entertainment device 102. For example, the first communication network 106 may be a wired broadband connection (e.g., DSL connection) and the second communication network 108 may be a satellite television distribution network. Thus, content can be communicated between the content source 104 and the entertainment device 102 over multiple communication networks 106 and 108 at various download speeds depending on the available bandwidth of the communication system 100. Communication system 100 may include other elements or components not illustrated for the sake of brevity.

While the embodiment described in FIG 1 has been illustrated with multiple connections of various speeds, it is to be appreciated that the teachings described herein may be applied as well within a uni-cast and broadcast architecture or similar speeds. Thus, the content source 104 may switch from transmitting content over multiple uni-cast connections (e.g., the first communication network 106) to a single broadcast connection (e.g., the second communication network 108). In some embodiments, the uni-cast and broadcasts provided by the content source 104 may have substantially similar speeds. This technique provides for more efficient transmission by the content source 104 because a single download from the content provider is maintained rather than a plurality of downloads.

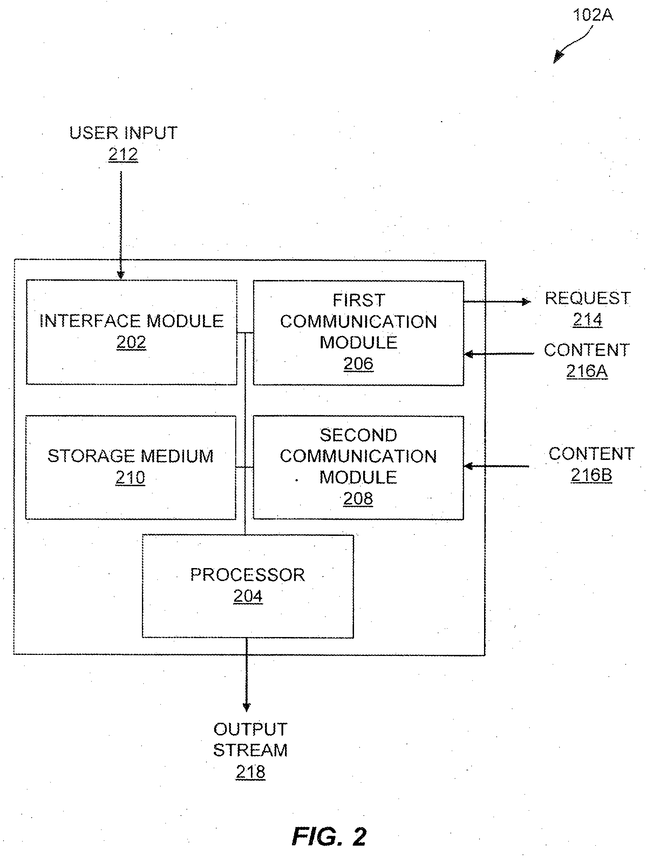

FIG. 2 illustrates an embodiment of an entertainment device of FIG. 1. FIG. 2 will be discussed in reference to the communication system 100 illustrated in FIG. 1. The entertainment device 102A includes an interface module 202, a processor 204, a first communication module 206, a second communication module 208 and a storage medium 210. Each of these components will be discussed in greater detail below.

The interface module 202 receives user input 212 requesting to access content located remotely with respect to the entertainment device 102A. The interface module 202 may comprise any type of device or system for receiving the user input 212. In at least one embodiment, the interface module 202 is operable to wirelessly receive the user input. 212 from a remote control for the entertainment device 202A. The interface module 202 may communicate with the remote control utilizing any type of IR or RF communication link. In some embodiments, the interface module 202 may comprise a keyboard or keypad or may be communicatively coupled to a keyboard or keypad that receives the user input 212 from a user.

The processor 204 is operable for controlling the operation of the entertainment device 102A. In at least one embodiment, the processor 204 receives the user input 212 and responsively generates a request 214 for transmission to the content source 104. The processor 204 is further operable for processing the content 216A/216B to generate an output stream 218 for presentation on a presentation device. The processor 204 may be optionally operable to receive commands from a remote control or other input device that request manipulation of playback of the content 216A/216B. If the content 216A/216B is to be stored for subsequent presentation to a user, then the processor 204 facilitates storage of the content 216A/216B on the storage medium 210.

The first communication module 206 is operable for communicating with the content source 104 over the first communication network 106. The first communication module 206 and the content source 104 may communicate over any type of network topology and any type of communication link. For example, the first communication module 206 may comprise an Ethernet port that communicates with the content source 104 over an internet connection. The first communication module 206 transmits the request 214 to the content source 104 and responsively receives content 216A. In at least one embodiment, the content 216A may comprise a portion of an audio or video file that the entertainment device 102A is downloading or streaming from the content source 104.

The second communication module 208 is operable for communicating with the content source 104 over the second communication network 108. The second communication module 208 and the content source 104 may communicate over any type of network topology and/or communication link that is different than the first communication network 106. For example, the first communication network 106 may be a 2-war broadband connection (e.g., an internet connection) provided over a coaxial cable and the second communication network 108 maybe a television, distribution network offered over the same coaxial cable. Thus, two different network topologies may be offered over the same physical communication medium. In at least one embodiment, the second communication module 208 receives data at a greater rate than the first communication module 206. For example, the second communication module 208 may comprise a satellite receiver that communicates with the content source 104 over a satellite connection.

While the entertainment device 102A receives the content 216A over the first communication network 106 (e.g., downloading a movie), the processor 204 receives information from the content source 104 indicating that the content 216A will be provided over the larger bandwidth second communication network 108. This information may be provided by the content source 104 to the entertainment device 102 over either the first communication network 106 or the second communication network 108. The processor 204 may then instruct the second communication module 208 to begin receiving the content 216B over the second communication network 108. Thus, the entertainment device 102A can complete download of the content 216A/216B over the greater bandwidth second communication network 108. This allows the entertainment device 102 to complete a download of the content 216A/216B at a faster rate from the high-bandwidth connection and/or use bandwidth more efficiently via broadcast delivery.

For example, the first communication module 206 may receive 10% of a movie during 30 minutes of downloading over the first communication network 106. If the download were to proceed fully over the first communication network 106 at the same rate, then the entire download of the movie would take 5 hours to complete over the first communication network 106. However, the second communication module 208 may be capable of completing the entire download in 5 minutes. Thus, if the content source 104 initiates transmission of the movie over the second communication network 208, then the entertainment device 102A may abandon downloading the content through the first communication module 206 in favor of completing the download through the second communication module 208. In at least one embodiment, the content source 104 begins transmission of the content 216B starting from the beginning of the content. In other words, the content source 104 transmits the entire portion of the content 216B over the second communication network 108. The entertainment device 102A receiving the content 216B over the second communication network 108 may store the portions of the content 216B that have not yet been received over the first communication network 106, discarding the received portions of the content 216B which are not needed. Thus, the remaining portions of the content 216A/216B which have not been received by the first communication module 206 are therefore received by the second communication module 208.

It is to be appreciated that in certain circumstances it may be desirable to complete download of content over the first communication network 106 even if the content is to be transmitted over a faster second communication network 108. If an entertainment device 102A is close to completing a download over an internet connection, then it may chose to continue with the internet download instead of switching to a satellite download. For example, an entire download of a movie may take 5 hours to complete (e.g., 1% downloaded every 3 minutes) over the first communication network 106. Further, the entire download of the movie may take 10 minutes to complete over the second communication network 108 (e.g., 1% downloaded every 6 seconds). Thus, if the download over the first communication network 106 was already 98% complete, then the download would complete sooner over the first communication network 106 than waiting to receive the remaining portion over the second communication network 108 if portions of the download were sent in the same order over each communication network 106 and 108. This is because the last 2% of the movie will be downloaded over the first communication network 106 during the next six minutes, during which the content source 104 will be transmitting the first 60% of the movie over the second communication network 108. The content source 104 does not begin transmitting the last 2% of the movie over the second communication network 108 until nine minutes and 48 seconds later, after the entertainment device 102A would have completed downloading the content 216A over the first communication network 106.

The determination of whether to complete or end the download through the first communication network 106 may be determined by the processor 204 of then entertainment device 102A and/or by the content source 104. Further, this determination may be made based on a variety of factors, such as the remaining time or level of completion for transmission of the content over the first communication network 106 and/or the reliability of the first communication network 106 and the second communication network 108. It is to be appreciated that some broadcast downloads may be incomplete due to various problems, such as rain fade. Thus, in some embodiments, the entertainment device 102A may receive the majority of the content from the content source 104 over the second communication network 108, and may fill in un-received portions via download over the first communication network 106.

Those of ordinary skill in the art will appreciate that the various functional elements 202 through 210 shown as operable within the entertainment device 102A may be combined into fewer discrete elements or may be broken up into a larger number of discrete functional elements as a matter of design choice. Thus, the particular functional decomposition suggested by FIG. 2 is intended merely as exemplary of one possible functional decomposition of elements within the entertainment device 102A.

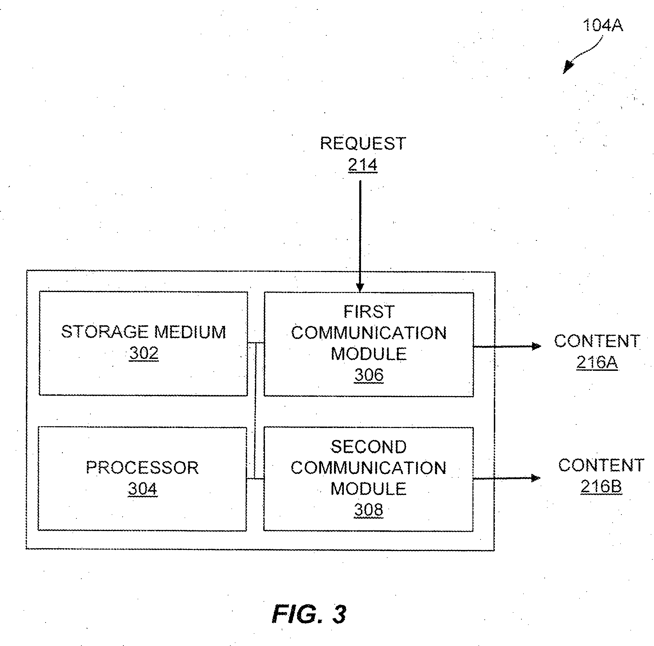

FIG. 3 illustrates an embodiment of a content source of FIG. 1. FIG. 3 will be discussed in reference to the communication system 100 illustrated in FIGS. 1-2. The content source 104A includes a storage medium 302, a processor 304, a first communication module 306 and a second communication module 308. Each of these components will be discussed in greater detail below.

The storage medium 302 is operable for storing multiple files of content that can be remotely accessed by the entertainment device 102A. The storage medium 302 may comprise any type of system or device for storing content, such as a hard drive, flash storage device, optical storage device and the like. In at least one embodiment, the content comprises a plurality of videos (e.g., movies) which may be arranged as a catalog of movies accessible by the entertainment device 102A.

The first communication module 306 is operable for communicating with the entertainment device 102A over the first communication network 106. As described above, the first communication module 306 and the entertainment device 102A may communicate over any type of network topology and communication link, such as the internet. The first communication module 306 receives the request 214 from the entertainment device 102A and is operable for transmitting the content 216A to the entertainment devices 102. In other words, the first communication module 306 begins transmitting a download of the content 216A to the entertainment device 102A responsive to the request 214.

The processor 304 is operable for controlling the operation of the content source 104. The processor 304 receives the request 214 and initiates transmission of the content 216A through the first communication module 306. The processor 304 further tabulates votes for the catalog of content stored on the storage medium 302 based on the request 214 and allocates a priority for bandwidth on the second communication network 108 based on the votes. For example, the priority may be based on the number of users requesting content over the first communication network 106. Thus, the processor 304 may allocate bandwidth on the second communication network 108 for transmission of the content 216B over the larger bandwidth connection in order to accommodate the requests of the largest number of entertainment devices 102A.

The second communication module 308 is operable for communicating with the entertainment device 102 over the second communication network 108. More particularly, the second communication module 308 transmits the content 216B responsive to instruction from the processor 304. For example, the entertainment device 102A may be downloading a selected video from the content source 104A over the first communication network 106. The processor 304 may determine that the selected video has the highest priority for transmission across the second communication network 108, and responsively initiate transmission of the selected video through the second communication module 308. The selected video is broadcast to a large number of entertainment devices 102A, allocating the greater bandwidth capacity of the second communication network 108 to the largest number of users.

Those of ordinary skill in the art will appreciate that the various functional elements 302 through 308 shown as operable within the content source 104A may be combined into fewer discrete elements or may be broken up into a larger number of discrete functional elements as a matter of design choice. Thus, the particular functional decomposition suggested by FIG. 3 is intended merely as exemplary of one possible functional decomposition of elements within the content source 104A.

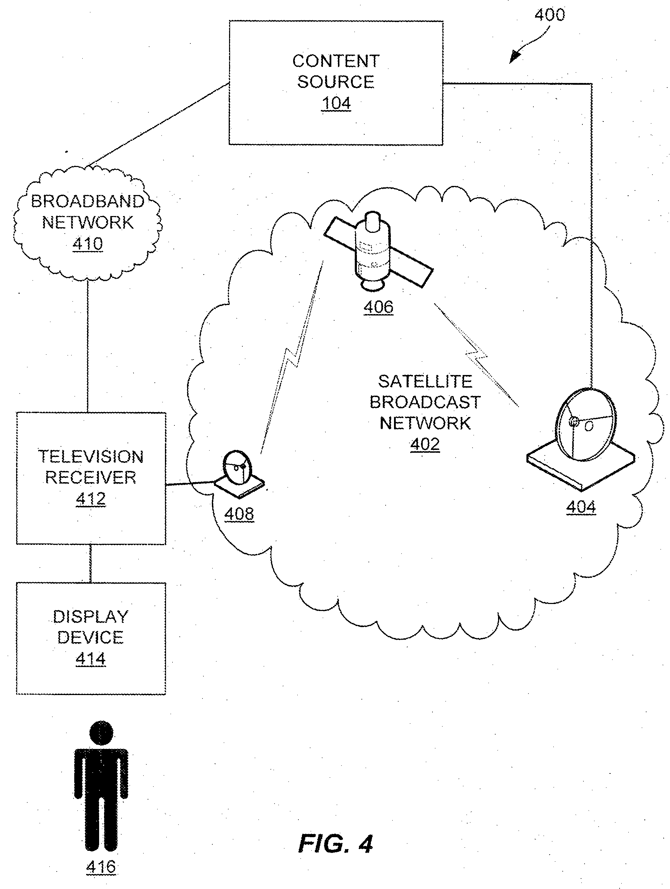

FIG. 4 illustrates an embodinent of a satellite broadcast system 400. The satellite broadcast system 400 includes a content source 104, a satellite broadcast network 402, an uplink center 404, a satellite 406, a satellite antenna 408, a broadband network 410, a television receiver 412 and a display device 414. Each of these components will be discussed in greater detail below. Discussion of components common to FIGS. 1-3 is omitted for the sake of brevity.

The television receiver 412 is in signal communication with the content source 104 through the broadband network 410. The television receiver 412 requests access to a video from the content source 104 and the content source 104 begins transmission of the video to the television receiver 412 over the broadband network 410. The video may be selected from a catalog of videos available for access from the content source 104. The television receiver 412 is further operable to output the video for display on a display device 414, such as a television. In at least one embodiment, the television receiver 412 begins downloading a movie from the content source 104 over the broadband network 410 for subsequent presentation to the user 416.

While transmitting the video to the television receiver over the broadband network 410, the content source tabulates votes to determine whether to allocate bandwidth for transmitting the video over the larger bandwidth satellite broadcast network 402. For example, the content source 104 may determine that unallocated bandwidth exists on the satellite broadcast network 402, and may further determine that the selected video has more requests for access over the broadband network 410 than any other video in the catalog of the content source 104. The content source 104 may create a queue of videos each having different priority transmissions over the satellite broadcast network 402. The content source 104 notifies the television receiver 412 that the selected video will be broadcast shortly over the satellite broadcast network 402. The notification may be provided to the television receiver 412 through the broadband network 410 and/or the satellite broadcast network 402.

The content source 104 is in signal communication with an uplink center 404 of the satellite broadcast network 402. The content source 104 provides the uplink center 404 with the selected video for broadcast to the television receiver 412. The satellite broadcast network 402 further comprises a satellite 406 in signal communication with the uplink center 404. The satellite 406 broadcasts the selected video received from the uplink center 404. The satellite broadcast network 402 further comprises a satellite antenna 408 for receiving the selected video broadcast from the satellite 406. The satellite antenna 408 is in signal communication with the television receiver 412, and provides the television receiver 412 with the video content. In at least one embodiment, the television receiver 412 stores the selected video for subsequent presentation to the user 416 (e.g., downloads the movies to a storage medium).

The television receiver 412 may be operable to download the selected video from the satellite broadcast network 402 during a high speed transmission that is faster than the real-time presentation rate of the video. For example, the satellite broadcast network 402 may transmit a two hour movie to the television receiver 412 during a live minute span of time. By transmitting content during short time periods, the satellite broadcast network 402 may be utilized to quickly transmit many different movies to a large number of television receivers 412. After the transmission of the highest priority video is competed, the content source 104 may transmit the next highest priority video in the queue over the satellite broadcast network 402.

For example, the content source 104 may include a catalog of ten different movies available for download by the television receiver 412. In at least one embodiment, each movie may always be available for download by the television receiver 412 from the content source 104 over the broadband network 410. Further, the content source 104 may provide the most requested movie for download by the television receiver 412 over the satellite broadcast network 402. In other words, the content source 104 broadcasts a movie for download during short time intervals over the satellite broadcast network 402 based on how many television receivers 412 are actively accessing the content over the internet. Thus, a television receiver 412 may abandon its broadband network 410 download in order to complete the download over the satellite broadcast network 402. Thus, at any particular time, the greatest number of users may utilize the high capacity bandwidth of the satellite broadcast network 402 in order to complete their download.

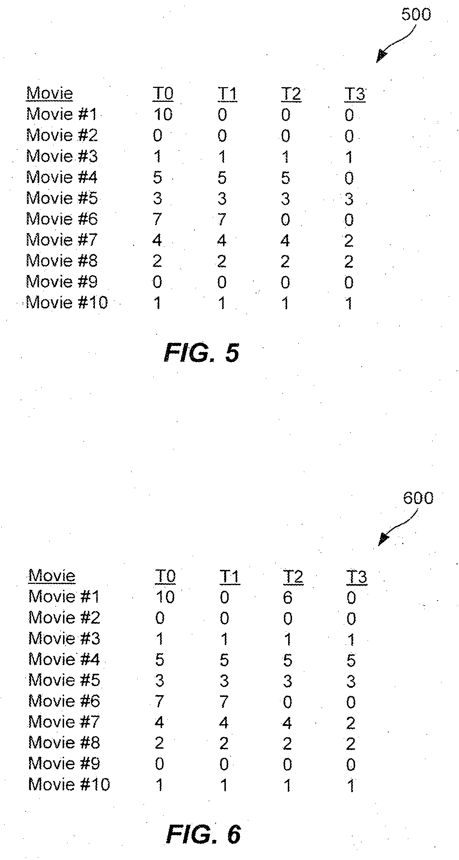

FIG. 5 illustrates an embodiment of a table 500 illustrating the number of users accessing each movie of the catalog of the content source 104 of FIG. 4. More particularly, FIG. 5 illustrates the number of users accessing each movie over the internet. The table 500 will be discussed in reference to the satellite television system 400 of FIG. 4.

The first column of the table 500 represents the name of a particular movie in the catalog. The next four columns of the table 500 illustrate the number of users downloading each movie from the content source 104 over the broadband network 410 at each designated time. As illustrated in FIG. 5, Movie #1 has the greatest number ot IP downloads at time T0. Thus, Movie #1 has the highest priority for transmission over the satellite broadcast network 402 at time T0. Further, at time T0, the content source 104 determines that bandwidth exists to broadcast a movie over the satellite broadcast network 402, and allocates the bandwidth to Movie #1. Thus, after time T0, each user downloading Movie #1 abandons their download over the broadband network 410 and begins downloading the movie over the faster satellite broadcast network 402.

At time T1, there are zero users downloading Movie #1 over the broadband network 410 at time T1, because each user has downloaded Movie #1 over the satellite broadcast network 402. At time T1, the content source 104 may determine that bandwidth exists to broadcast another movie over the satellite broadcast network 402. For example, the transmission of Movie #1 may be complete at time T1. Thus, the content source 104 selects Movie #6 for transmission over the satellite broadcast network 402, because Movie #6 has the highest number of users downloading the movie over the broadband network 410 at time T1. At time T2, Movie #4 has the highest priority for transmission across the satellite broadcast network 402 because Movie #4 has the most number of broadband network 410 downloads, and thus, Movie #4 is transmitted over the satellite broadcast network 402 at time T2.

As illustrated in table 500, after a movie is selected for transmission across the satellite broadcast network 402, the number of internet downloads typically decreases to zero. This is because each television receiver 412 ends the internet download of a movie upon initiation of the satellite broadcast network 402 transmission of the movie. However, this may not occur if one or more users desire to continue their download from the content source 104 over the internet. Still, each transmission of a movie over the satellite broadcast network 402 may decrease the priority of the movie during the next transmission interval since the majority of television receivers 412 will abandon their download over the broadband network 410 in favor of downloading over the satellite broadcast network 402.

Further, the requests for a particular movie may expire as users complete their download over the internet. For example, at time T2, Movie #7 has a higher priority than Movie #5 for transmission across the satellite broadcast network 402. Thus, according to the priorities determined at time T2, Movie #7 would be transmitted across the satellite broadcast network 402 at time T3 once transmission of the higher priority Movie #4 is completed. However, between times T2 and T3 two users complete their download of Movie #7. Thus, at time T3, Movie #5 has the highest priority for transmission across the satellite broadcast network 402, and the content source 104 selects Movie #5 for transmission across the satellite broadcast network 402.

In other embodiments, requests may be partially counted and/or expired depending on how far a particular user's download has proceeded. For example, a user that has completed 90% of a download of a movie may count significantly less than a user than has completed less than 50% of the download of the same movie. Thus, a first movie in which a large number of users have "almost" completed their download may be skipped for broadcasting in favor of broadcasting a second movie that has less users downloading. If the majority of the users downloading the second movie have just initiated their downloads, then the bandwidth may be more efficiently utilized than by broadcasting the first movie to the large number of users that have already "almost" completed their downloads. As a user completes certain milestones of their download, then their request may also be partially expired. For example, after a user has completed 50% of their download, then their request may have less influence on the tally then when the user had completed only 25% of their download.

Some movies may be so popular for download from the content source 104 that they always rise back up to the front of the priority queue for transmission across the larger bandwidth satellite broadcast network 402. This is because after each instance of transmitting the movie over the satellite broadcast network 402, a new group of users will begin downloading the movie over the internet. Thus, the most efficient use of the greater bandwidth of the satellite broadcast network 402 will be to again transmit the movie during a subsequent transmission interval.

FIG. 6 illustrates an embodiment of another table 600 illustrating the number of users accessing each movie of the catalog of the content source 104 of FIG. 4. More particularly, FIG. 6 illustrates the number of users accessing each movie over the internet. The table 600 will be discussed in reference to the satellite television system 400 of FIG. 4.

At time T0, Movie #1 has the highest priority for transmission across the satellite broadcast network 402 based on the number of internet downloads. Thus, the content source 104 transmits Movie #1 over the satellite broadcast network 402 to the users presently downloading Movie #1 over the internet at time T0. At time T1, there are no users downloading Movie #1, and Movie #6 has the highest priority for transmission across the satellite broadcast network 402 during the next transmission interval and Movie #4 has the next highest priority for transmission. The content source 104 thus transmits Movie #6 over the satellite broadcast network 402 at time T1.

At time T2, there are six users downloading Movie #1 over the internet. Thus, Movie #1 again has the highest priority for transmission across the satellite broadcast network 402 and Movie #4 has the next highest priority for transmission across the satellite broadcast network 402. Because Movie #1 has the highest priority at time T2, the content source 104 again transmits Movie #1 over the satellite broadcast network 402. Movie #4 will have the highest priority for transmission at time T3, and the content source 104 will transmit Movie #4 over the satellite broadcast network 402 at time T3.

In at least one embodiment of the satellite broadcast system 400, some movies may never have enough internet download requests in order to move up to the top of the priority list for transmission across the satellite broadcast network 402. Thus, users downloading these movies may likely complete their entire download over the internet rather than utilizing any portion of the high capacity bandwidth of the satellite broadcast network 402. However, the content source 104 is able to offer a large catalog of movies and dynamically allocate the faster bandwidth in order to most efficiently transmit content to a plurality of users. Thus, the most popular movies are transmitted to users over a high bandwidth connection, but users who want to access less popular content can still do so over the slower internet connection.

In at least one embodiment, a television receiver 412 is configured to automatically download movies transmitted over the satellite broadcast network 402, regardless of whether the television receiver 412 was previously downloading the movie over the broadband network 410. For example, a television receiver 412 may be configured to automatically store the ten most recent movies transmitted over the satellite broadcast network 402. Thus, when a user 416 sits down to watch television, their television receiver 412 stores the most popular movies that are immediately available for on-demand viewing.

In another embodiment, a television receiver 412 may not have an internet connection that is fast enough to download any movies from the content source 412. However, the user may configure their television receiver 412 to download movies from the satellite broadcast network 402 as they become available for download. For example, a user 416 may designate that they desire to download certain movies from the content source 104 that are transmitted over the satellite broadcast network 402 if these movies are made available. If the television receiver 412 determines that a requested movie is made available for download over the satellite broadcast network 402, then the television receiver 412 downloads the movie from the satellite broadcast network 402 and stores the movie for subsequent presentation to the user 418. Thus, the television receiver 412 is unable to download the movie over the satellite broadcast network 402 unless enough other users desire to download the movie from the content source 104 that the movie is made available over the satellite broadcast network 402.

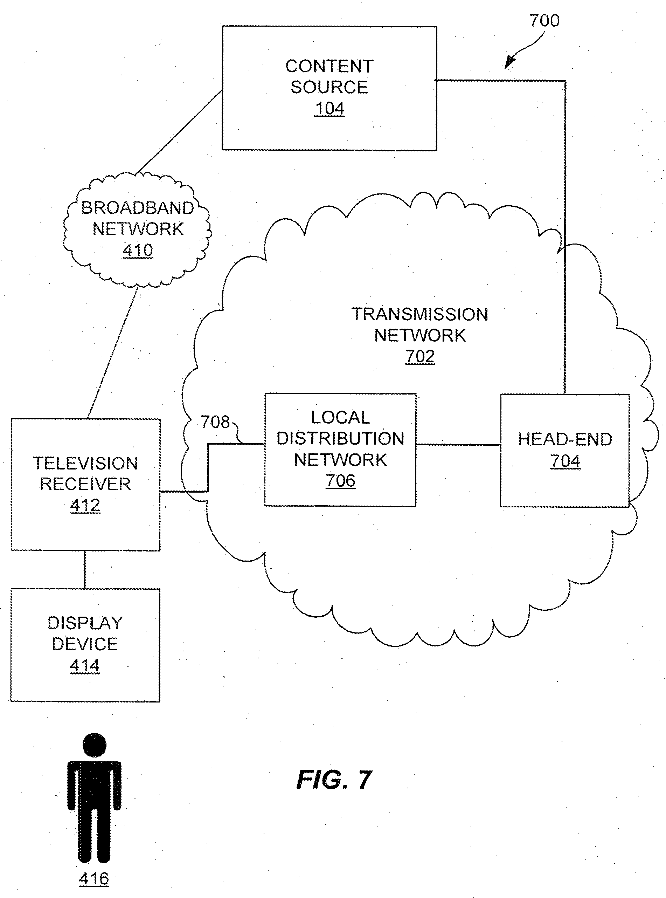

The satellite broadcast network 402 may alternatively be embodied in a cable television distribution system. FIG. 7 illustrates an embodiment of a cable television distribution system 700. The cable television distribution system 700 includes a content source 104, a broadband network 410, a television receiver 412, a display device 414, a transmission network 702, a head-end 704, a local distribution network 706 and a drop 708. Each of these components will be discussed in greater detail below. Discussion of components common to FIGS. 1-4 is omitted for the sake of brevity.

As described above, a television receiver 412 begins downloading content from the content source 104 over the broadband network 410. During the download, the content source 104 may determine that bandwidth exists to complete the download over a high-bandwidth connection, such as the transmission network 702. Thus, the content source 104 notifies the television receiver 412 to complete the download over the transmission network 702.

The transmission network 702 comprises a head-end 704 in signal communication with the content source 104. The content source 104 provides the head-end 704 with the content. The transmission network 702 further comprises a local distribution network 706 in signal communication with the head-end 704. The local distribution network 706 is operable for receiving content from the head-end 704 and distributing the content to individual television receivers 412. The television receiver 412 is in signal communication with the local distribution network 706 using a drop 708 from a feeder line of local distribution network 706. In at least one embodiment, the local distribution network 706 provides the content as a broadcast to the television receiver 412. The television receiver 412 receives the content and outputs the content for display on the display device 414.

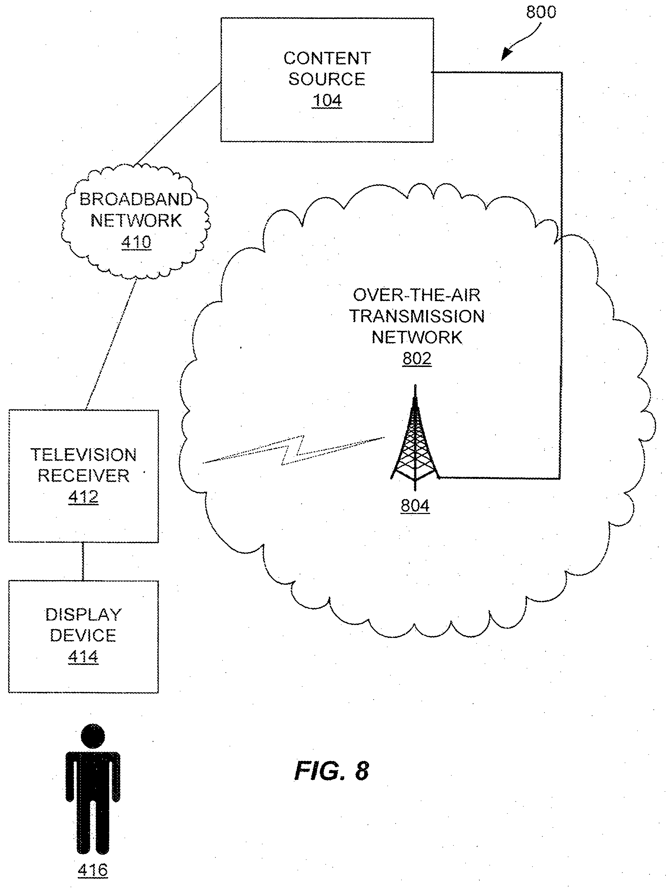

The satellite broadcast network 402 and/or the cable television distribution system 700 may alternatively be embodied in an over-the-air television distribution system. In some embodiments, the satellite broadcast network 402 and/or the cable television distribution system 700 may be augmented by over-the-air television distribution systems. FIG. 8 illustrates an embodiment of an over-the-air television distribution system 800. The over-the-air television distribution system 800 includes a content source 104, a broadband network 410, a television receiver 412, a display device 414, an over-the-air transmission network 802 and a transmission tower 804. Each of these components will be discussed in greater detail below. Discussion of components common to FIGS. 1-4 is omitted for the sake of brevity.

As described above, a television receiver 412 begins downloading content from the content source 104 over the broadband network 410. During the download, the content source 104 may determine that bandwidth exists to complete the download over a high-bandwidth connection, such as the over-the-air transmission network 802. Thus, the content source 104 notifies the television receiver 412 to complete the download over the over-the-air transmission network 802.

The over-the-air transmission network 802 comprises a transmission tower 804 in signal communication with the content source 104. The content source 104 provides the transmission tower 804 with the content. The transmission tower 804 transmits the content over-the-air, either using a defined over the-air channel or through a defined data communication channel to individual television receivers 412. The television receiver 412 receives the content and outputs the content for display on the display device 414.

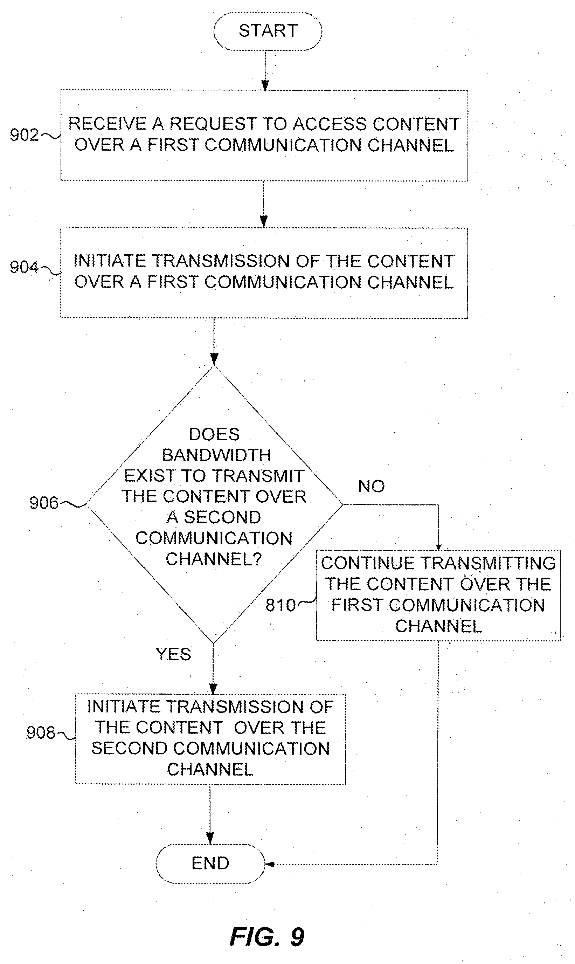

FIG. 9 illustrates an embodiment of a process for providing content to an entertainment device. More particularly, FIG. 9 illustrates a process for democratically allocating larger bandwidth connections for transmission of the most requested content. The operations of FIG. 9 are not all-inclusive, and may include other operations not illustrated for the sake of brevity.

The method includes receiving a request from an entertainment device to access content over a first communication channel (operation 902). For example, an entertainment device may request to access content from a web server over an internet connection. The method further includes initiating transmission of the content to the entertainment device over the first communication channel (operation 904). For example, the web server may begin transmitting the content to the entertainment device over the internet. In at least one embodiment, the entertainment device begins downloading the content for subsequent presentation to a user. In other embodiments, the entertainment device begins streaming the content for real-time presentation to a user.

The method further includes determining that bandwidth exists to transmit the content over a second communication channel (operation 906). The second communication channel has a greater bandwidth than the first communication channel. If bandwidth exists to transmit the content over the second communication channel, then the method may further include initiating transmission of the content over the second communication channel (operation 908). Thus, the entertainment device completes receiving the content over the second communication channel. In at least one embodiment, the entertainment device downloads the content, and thus, completes the download of the content over the second communication channel. The determination in operation 906 may be performed in an iterative manner as the download progresses. Thus, if bandwidth is not initially available to transmit the content over the second communication channel, then a subsequent determination may be performed to determine whether bandwidth has become available to transmit the content.

In other embodiments, the entertainment device streams the content from the content source. Thus, when switching to the high-bandwidth connection, the entertainment device is able to receive more data or receive data at a faster speed. For example, the entertainment device may be able to buffer more data to decrease the likelihood of skipping during playback of the movie. In at least one embodiment, the entertainment device is able to begin streaming a higher-definition version and/or higher-quality version (e.g., less compression) of the content because of the availability of more bandwidth for transmissions between the content source and the entertainment device.

if there is not unallocated available bandwidth to transmit the content over the second communication channel, then the method includes continuing to transmit the content over the first communication channel (operation 910). Thus, the entertainment device completes download of the content over the first communication channel. The method can optionally include looping back from operation 910 to operation 906 to periodically determine whether allocated bandwidth has opened up to complete transmission of the content over the second communication channel.

As described above, bandwidth of the second communication channel may be allocated based on a priority queuing technique. For example, bandwidth, may be allocated for transmission of particular movies based on the number of users accessing the movie. For example, a number of users accessing the content over the first communication channel may be tabulated based on the request from the entertainment device. A priority of the content for transmission over the second communication channel may be determined based on the number of users accessing the content over the first communication channel. The content may then be selected for transmission over the second communication channel based on the priority of the content. In other words, a queue may be generated for a plurality of selected content files available for downloading by an entertainment device. The placement of content within the transmission queue is dynamically determined based on the number of users downloading the content, over a lower bandwidth connection (e.g., the internet). Thus, content is transmitted over a larger bandwidth connection (e.g., a satellite broadcast) when its location reaches the top of the transmission queue.

Although specific embodiments were described herein, the scope of the invention is not limited to those specific embodiments. The scope of the invention is defined by the following claims and any equivalents therein.

## Claims

1. A method for providing content to an entertainment device, the method comprising:
receiving a request from an entertainment device to access content over a first communication channel;
initiating transmission of the content to the entertainment device over the first communication channel at a first data rate;
periodically determining whether unallocated bandwidth exists to transmit the content over a second communication channel, the second communication channel having a larger bandwidth than the first communication channel;
dynamically initiating transmission of the content to the entertainment device over the second communication channel at a second data rate using unallocated bandwidth when it is determined that there is unallocated bandwidth, the second data rate transferring the content to the entertainment device during a shorter time period than transfer of the content at the first data rate, wherein the entertainment device completes download of the content over the second communication channel; and
continuing to transmit the content over the first communication channel when it is determined that there is no unallocated bandwidth available;
wherein the method further comprises determining a level of completion of a download of the selected video by the entertainment device, and selecting to continue downloading the selected content from the first communication channel based on the level of completion.

2. The method of claim 1 wherein determining a level of completion of a download of the selected content by the entertainment device is based on the remaining time for transmission of the content over the first communication network and/or the reliability of the first communication network and the second communication network.

3. The method of claim 1, wherein determining that unallocated bandwidth exists to transmit the content over a second communication channel further comprises:
tabulating a number of users accessing the content over the first communication channel based on the request;
determining a priority of the content for transmission over the second communication channel based on the number of users accessing the content over the first communication channel; and
selecting the content for transmission over the second communication channel, using the unallocated bandwidth, based on the priority of the content.

4. The method of claim 1, wherein the first communication channel provides a unicast of the content, and wherein the second communication channel provides a broadcast of the content, the first channel preferably being provided over an internet connection and the second channel preferably being provided over a satellite broadcast system.

5. A method according to claim 1 wherein:
the content is a selected video of a plurality of videos, the method further comprising:
tabulating votes for the plurality of videos based on the request to access content;
allocating a portion of the unallocated bandwidth of the second communication channel for transmission of the selected video based on the votes; and
initiating transmission of the selected video over the second communication channel.

6. The method of claim 5, wherein allocating the portion of unallocated bandwidth of the second communication channel further comprises:
queuing the selected video for delivery over the second communication channel based on a priority of the selected video, wherein the priority is determined based on the votes for the plurality of videos; and
allocating the portion of the bandwidth of the second communication channel to the selected video based on the location of the selected video in the queue; and wherein, preferably, allocating the portion of bandwidth of the second communication channel further comprises:
allocating the portion of the bandwidth of the second communication channel for transmission of the selected video responsive to determining that the selected video has received a larger number of votes than the other plurality of videos.

7. A system comprising:
an entertainment device (412, 414) that generates a request to access content;
a first communication network (410) communicatively coupled to the entertainment device that provides a first communication channel;
a second communication network communicatively coupled to the entertainment device that provides a second communication channel, wherein the second communication channel has a larger bandwidth than the first communication channel; and
a content source (104) communicatively coupled to the entertainment device over the first and second communication channels arranged to:
receive the request from the entertainment device over the first communication channel;
initiate transmission of the content to the entertainment device through a unicast over the first communication channel responsive to the request at a first data rate;
periodically determine whether unallocated bandwidth exists over the second communication channel;
dynamically allocate unallocated bandwidth, when it is determined that there is unallocated bandwidth, for transmitting the content over the second communication channel at a second rate;
initiate transmission of the content over the second communication channel; and
end transmission of the content over the first communication channel;
wherein the entertainment device completes download of the content over the second communication channel, the second data rate transferring the content during a shorter time period than transfer of the content at the first data rate; and
continue to transmit the content over the first communication channel when it is determined that there is no unallocated bandwidth available
the content source further being arranged to determine a level of completion of a download of the selected content by the entertainment device, and select to continue downloading the selected content from the first communication channel based on the level of completion.

8. The system of claim 7, wherein the content source:
tabulates a number of users accessing the content over the first communication channel based on the request, wherein the content is at least one of a plurality of content files available for access;
determines a priority of the content for transmission over the second communication channel based on the number of users accessing the content over the first communication channel; and
allocates unallocated bandwidth of the second communication channel for transmission of the content based on the priority.

9. The system of claim 7, wherein the first communication channel is provided over an internet connection and the second communication channel is provided over a satellite broadcast system.

10. An apparatus (104A) comprising:
a storage medium (302) that stores a plurality of videos;
a first communication module (306) that receives a request from an entertainment device over a first communication channel for access to a selected video of the plurality of videos and that initiates transmission of the selected video to the entertainment device over the first communication channel at a first data rate;
a processor (304) communicatively coupled to the first communication module that tabulates votes for the plurality of videos based on the request and that allocates a priority for bandwidth of a second communication channel for transmission of the selected video based on the votes, wherein the second communication channel has a larger bandwidth than the first communication channel and transmits the selected video at a second data rate, the second data rate transferring the selected video to the entertainment device during a shorter time period than transfer of the content at the first data rate; and
a second communication module (308) that dynamically initiates transmission of the selected video over the second communication channel, using unallocated bandwidth, based on the priority;
wherein the apparatus is configured to periodically determine whether unallocated bandwidth exists over the second communication channel;
dynamically allocate unallocated bandwidth, when it is determined that there is unallocated bandwidth, for transmitting the content over the second communication channel at a second rate;
initiate transmission of the content over the second communication channel; and
end transmission of the content over the first communication channel; whereby the entertainment device completes download of the content over the second communication channel, the second data rate transferring the content during a shorter time period than transfer of the content at the first data rate;
continue to transmit the content over the first communication channel when it is determined that there is no unallocated bandwidth available; and
determine a level of completion of a download of the selected content by the entertainment device, and select to continue downloading the selected content from the first communication channel based on the level of completion.

11. The apparatus of claim 10, wherein the processor ends transmission of the selected video to the entertainment device over the first communication channel responsive to initiation of transmission of the selected video by the second communication module, wherein the entertainment device completes download of the selected video over the second communication channel.

12. The apparatus of claim 10, wherein the processor queues the selected video for delivery over the second communication channel based on the priority and further allocates the unallocated bandwidth of the second communication channel to the selected video based on the location of the selected video in the queue; and/or
the processor queues the selected video for delivery over the second communication channel based on the priority and further allocates the portion of the bandwidth of the second communication channel to the selected video responsive to determining that the selected video has received a larger number of votes than the other plurality of videos.

13. The apparatus of claim 10, wherein the processor expires a vote for the selected video based on the request responsive to completing transmission of the selected video over the first communication channel; and/or
the processor determines a level of completion of a download of the selected video by the entertainment device and further selects to continue transmission of the selected video over the first communication channel based on the level of completion.

14. The method of claim 1, wherein initiating transmission of the content to the entertainment device over the second communication channel at a second data rate further comprises:
initiating transmission of the content at the second data rate which is greater than a real-time presentation rate of the content.

15. An entertainment device (102A) comprising:
an interface module (202) that receives user input requesting to access content available from a remote server;
a first communication module (206) communicatively coupled to the interface module that transmits a request to the remote server over a first communication channel requesting access to the content, the first communication module further initiating reception of the content from the remote server over the first communication channel at a first data rate;
a processor (204) communicatively coupled to the first communication module arranged to receive information indicating that the content will be provided over a second communication channel using unallocated bandwidth on the second channel, the second communication channel having a larger bandwidth than the first communication channel; and
a second communication module (208) communicatively coupled to the processor that completes the reception of the content over the second communication channel at a second data rate which is greater than the first data rate, the second data rate transferring the content to the second communication module during a shorter time period than transfer of the content at the first data rate;
wherein the processor is configured to determine a level of completion of a download of the selected content by the entertainment device, and to select to continue downloading the selected content from the first communication channel based on the level of completion, and wherein the processor outputs the content for presentation on a presentation device.

## Patentansprüche

1. Verfahren zum Bereitstellen von Inhalt für ein Unterhaltungsgerät, wobei das Verfahren folgendes beinhaltet:
Empfangen einer Anforderung von einem Unterhaltungsgerät für Zugang zu Inhalt über einen ersten Kommunikationskanal;
Einleiten des Sendens des Inhalts zu dem Unterhaltungsgerät über den ersten Kommunikationskanal mit einer ersten Datenrate;
periodisches Feststellen, ob unzugewiesene Bandbreite zum Senden des Inhalts über einen zweiten Kommunikationskanal existiert, wobei der zweite Kommunikationskanal eine größere Bandbreite hat als der erste Kommunikationskanal;
dynamisches Einleiten des Sendens des Inhalts zu dem Unterhaltungsgerät über den zweiten Kommunikationskanal mit einer zweiten Datenrate unter Verwendung von unzugewiesener Bandbreite, wenn festgestellt wird, dass es unzugewiesene Bandbreite gibt, wobei die Übertragung des Inhalts zu dem Unterhaltungsgerät mit der zweiten Datenrate in einer kürzeren Zeitperiode erfolgt als die Übertragung des Inhalts mit der ersten Datenrate, wobei das Unterhaltungsgerät das Herunterladen des Inhalts über den zweiten Kommunikationskanal vollendet; und
Fortsetzen des Sendens des Inhalts über den ersten Kommunikationskanal, wenn festgestellt wird, dass keine unzugewiesene Bandbreite zur Verfügung steht;
wobei das Verfahren ferner das Feststellen eines Vollendungsniveaus des Herunterladens des gewählten Videos durch das Unterhaltungsgerät und das Wählen der Fortsetzung des Herunterladens des gewählten Inhalts von dem ersten Kommunikationskanal auf der Basis des Vollendungsniveaus beinhaltet.

2. Verfahren nach Anspruch 1, wobei das Feststellen eines Vollendungsniveaus des Herunterladens des gewählten Inhalts durch das Unterhaltungsgerät auf der verbleibenden Zeit zum Senden des Inhalts über das erste Kommunikationsnetz und/oder der Zuverlässigkeit des ersten Kommunikationsnetzes und des zweiten Kommunikationsnetzes basiert.

3. Verfahren nach Anspruch 1, wobei das Feststellen, dass unzugewiesene Bandbreite zum Senden des Inhalts über einen zweiten Kommunikationskanal existiert, ferner Folgendes beinhaltet:
Tabellieren einer Anzahl von Benutzern, die über den ersten Kommunikationskanal auf den Inhalt zugreifen, auf der Basis der Anforderung;
Feststellen einer Priorität des Inhalts zum Senden über den zweiten Kommunikationskanal auf der Basis der Anzahl von Benutzern, die über den ersten Kommunikationskanal auf den Inhalt zugreifen; und
Auswählen des Inhalts zum Senden über den zweiten Kommunikationskanal unter Verwendung der unzugewiesenen Bandbreite auf der Basis der Priorität des Inhalts.

4. Verfahren nach Anspruch 1, wobei der erste Kommunikationskanal ein Unicast des Inhalts bereitstellt und wobei der zweite Kommunikationskanal ein Broadcast des Inhalts bereitstellt, wobei der erste Kanal vorzugsweise über eine Internetverbindung bereitgestellt wird und der zweite Kanal vorzugsweise über ein Satelliten-Broadcast-System bereitgestellt wird.

5. Verfahren nach Anspruch 1, wobei:
der Inhalt ein ausgewähltes Video aus einer Mehrzahl von Videos ist, wobei das Verfahren ferner Folgendes beinhaltet:
Tabellieren von Wählerstimmen für die Mehrzahl von Videos auf der Basis der Anforderung von Zugang zu Inhalt;
Zuweisen eines Teils der unzugewiesenen Bandbreite des zweiten Kommunikationskanals zum Senden des gewählten Videos auf der Basis der Wählerstimmen; und
Einleiten des Sendens des gewählten Videos über den zweiten Kommunikationskanal.

6. Verfahren nach Anspruch 5, wobei das Zuweisen des Teils von unzugewiesener Bandbreite des zweiten Kommunikationskanals ferner Folgendes beinhaltet:
Einreihen des gewählten Videos in eine Warteschlange zur Lieferung über den zweiten Kommunikationskanal auf der Basis einer Priorität des gewählten Videos, wobei die Priorität auf der Basis der Wählerstimmen für die Mehrzahl von Videos bestimmt wird; und
Zuweisen des Teils der Bandbreite des zweiten Kommunikationskanals zu dem gewählten Video auf der Basis des Orts des gewählten Videos in der Warteschlange; und wobei das Zuweisen des Teils von Bandbreite des zweiten Kommunikationskanals vorzugsweise ferner Folgendes beinhaltet:
Zuweisen des Teils der Bandbreite des zweiten Kommunikationskanals zum Senden des gewählten Videos als Reaktion auf die Feststellung, dass das gewählte Video eine größere Anzahl von Wählerstimmen erhalten hat als die anderen mehreren Videos.

7. System, das Folgendes umfasst:
ein Unterhaltungsgerät (412, 414), das eine Anforderung von Zugang zu Inhalt erzeugt;
ein erstes Kommunikationsnetz (410), das kommunikativ mit dem Unterhaltungsgerät gekoppelt ist, das einen ersten Kommunikationskanal bereitstellt;
ein zweites Kommunikationsnetz, das kommunikativ mit dem Unterhaltungsgerät gekoppelt ist, das einen zweiten Kommunikationskanal bereitstellt, wobei der zweite Kommunikationskanal eine größere Bandbreite hat als der erste Kommunikationskanal; und
eine Inhaltsquelle (104), die mit dem Unterhaltungsgerät kommunikativ über den ersten und zweiten Kommunikationskanal gekoppelt ist, ausgelegt zum:
Empfangen der Anforderung von dem Unterhaltungsgerät über den ersten Kommunikationskanal;
Einleiten des Sendens des Inhalts zum Unterhaltungsgerät durch ein Unicast durch den ersten Kommunikationskanal als Reaktion auf die Anforderung mit einer ersten Datenrate;
periodisches Feststellen, ob unzugewiesene Bandbreite über den zweiten Kommunikationskanal existiert;
dynamisches Zuweisen von unzugewiesener Bandbreite, wenn festgestellt wird, dass es unzugewiesene Bandbreite gibt, zum Senden des Inhalts über den zweiten Kommunikationskanal mit einer zweiten Rate;
Einleiten des Sendens des Inhalts über den zweiten Kommunikationskanal; und
Beenden des Sendens des Inhalts über den ersten Kommunikationskanal;
wobei das Unterhaltungsgerät das Herunterladen des Inhalts über den zweiten Kommunikationskanal vollendet, wobei die Übertragung des Inhalts mit der zweiten Datenrate in einer kürzeren Zeitperiode erfolgt als die Übertragung des Inhalts mit der ersten Datenrate; und
Fortsetzen des Sendens des Inhalts über den ersten Kommunikationskanal, wenn festgestellt wird, dass keine unzugewiesene Bandbreite zur Verfügung steht,
wobei die Inhaltsquelle ferner zum Feststellen eines Vollendungsniveaus eines Herunterladens des gewählten Inhalts durch das Unterhaltungsgerät und zum Wählen des Fortsetzens des Herunterladens des gewählten Inhalts vom ersten Kommunikationskanal auf der Basis des Vollendungsniveaus ausgelegt ist.

8. System nach Anspruch 7, wobei die Inhaltsquelle:
eine Anzahl von Benutzern tabelliert, die auf der Basis der Anforderung über den ersten Kommunikationskanal auf den Inhalt zugreifen, wobei der Inhalt wenigstens eine aus einer Mehrzahl von für den Zugriff zur Verfügung stehenden Inhaltsdateien ist;
eine Priorität des Inhalts zum Senden über den zweiten Kommunikationskanal auf der Basis der Anzahl von Benutzern bestimmt, die über den ersten Kommunikationskanal auf den Inhalt zugreifen; und
unzugewiesene Bandbreite des zweiten Kommunikationskanals zum Senden des Inhalts auf der Basis der Priorität zuweist.

9. System nach Anspruch 7, wobei der erste Kommunikationskanal über eine Internetverbindung bereitgestellt wird und der zweite Kommunikationskanal über ein Satelliten-Broadcast-System bereitgestellt wird.

10. Vorrichtung (104A), die Folgendes umfasst:
ein Speichermedium (302), das eine Mehrzahl von Videos speichert;
ein erstes Kommunikationsmodul (306), das eine Anforderung von einem Unterhaltungsgerät über einen ersten Kommunikationskanal von Zugang zu einem gewählten Video aus der Mehrzahl von Videos empfängt und das Senden des gewählten Videos zum Unterhaltungsgerät über den ersten Kommunikationskanal mit einer ersten Datenrate einleitet;
einen Prozessor (304), der kommunikativ mit dem ersten Kommunikationsmodul gekoppelt ist, der Wählerstimmen für die Mehrzahl von Videos auf der Basis der Anforderung tabelliert und der eine Priorität für Bandbreite eines zweiten Kommunikationskanals zum Senden des gewählten Videos auf der Basis der Wählerstimmen zuweist, wobei der zweite Kommunikationskanal eine größere Bandbreite hat als der erste Kommunikationskanal und das gewählte Video mit einer zweiten Datenrate sendet, wobei die Übertragung des gewählten Videos zu dem Unterhaltungsgerät mit der zweiten Datenrate in einer kürzeren Zeitperiode erfolgt als die Übertragung des Inhalts mit der ersten Datenrate; und
ein zweites Kommunikationsmodul (308), das das Senden des gewählten Videos über den zweiten Kommunikationskanal unter Verwendung von unzugewiesener Bandbreite auf der Basis der Priorität dynamisch einleitet;
wobei die Vorrichtung zum periodischen Feststellen konfiguriert ist, ob unzugewiesene Bandbreite über den zweiten Kommunikationskanal existiert;
dynamisches Zuweisen von unzugewiesener Bandbreite, wenn festgestellt wird, dass es unzugewiesene Bandbreite gibt, zum Senden des Inhalts über den zweiten Kommunikationskanal mit einer zweiten Rate;
Einleiten des Sendens des Inhalts über den zweiten Kommunikationskanal; und
Beenden des Sendens des Inhalts über den ersten Kommunikationskanal;
so dass das Unterhaltungsgerät das Herunterladen des Inhalts über den zweiten Kommunikationskanal vollendet, wobei das Übertragen des Inhalts mit der zweiten Datenrate in einer kürzeren Zeitperiode erfolgt als die Übertragung des Inhalts mit der ersten Datenrate;
Fortsetzen des Sendens des Inhalts über den ersten Kommunikationskanal, wenn festgestellt wird, dass keine unzugewiesene Bandbreite zur Verfügung steht; und
Feststellen eines Vollendungsniveaus eines Herunterladens des gewählten Inhalts durch das Unterhaltungsgerät und Wählen des Fortsetzens des Herunterladens des gewählten Inhalts von dem ersten Kommunikationskanal auf der Basis des Vollendungsniveaus.

11. Vorrichtung nach Anspruch 10, wobei der Prozessor das Senden des gewählten Videos zu dem Unterhaltungsgerät über den ersten Kommunikationskanal als Reaktion auf die Einleitung des Sendens des gewählten Videos durch das zweite Kommunikationsmodul beendet, wobei das Unterhaltungsgerät das Herunterladen des gewählten Videos über den zweiten Kommunikationskanal vollendet.

12. Vorrichtung nach Anspruch 10, wobei der Prozessor das gewählte Video zur Lieferung über den zweiten Kommunikationskanal auf der Basis der Priorität in eine Warteschlange einreiht und ferner die unzugewiesene Bandbreite des zweiten Kommunikationskanals zu dem gewählten Video auf der Basis des Orts des gewählten Videos in der Warteschlange zuweist; und/oder
der Prozessor das gewählte Video zum Liefern über den zweiten Kommunikationskanal auf der Basis der Priorität in eine Warteschlange einreiht und ferner den Teil der Bandbreite des zweiten Kommunikationskanals zu dem gewählten Video als Reaktion auf die Feststellung zuweist, dass das gewählte Video eine größere Anzahl von Wählerstimmen erhalten hat als die anderen mehreren Videos.

13. Vorrichtung nach Anspruch 10, wobei der Prozessor eine Wählerstimme für das gewählte Video auf der Basis der Anforderung als Reaktion auf die Vollendung des Sendens des gewählten Videos über den ersten Kommunikationskanal verfallen lässt; und/oder
der Prozessor ein Vollendungsniveau eines Herunterladens des gewählten Videos durch das Unterhaltungsgerät feststellt und ferner die Fortsetzung des Sendens des gewählten Videos über den ersten Kommunikationskanal auf der Basis des Vollendungsniveaus wählt.

14. Verfahren nach Anspruch 1, wobei das Einleiten des Sendens des Inhalts zu dem Unterhaltungsgerät über den zweiten Kommunikationskanal mit einer zweiten Datenrate ferner Folgendes beinhaltet:
Einleiten des Sendens des Inhalts mit der zweiten Datenrate, die größer ist als eine Echtzeit-Darstellungsrate des Inhalts.

15. Unterhaltungsgerät (102A), das Folgendes umfasst:
ein Schnittstellenmodul (202), das eine Benutzereingabe empfängt, die Zugang zu Inhalt anfordert, der von einem Fernserver zur Verfügung steht;
ein erstes Kommunikationsmodul (206), das kommunikativ mit dem Schnittstellenmodul gekoppelt ist, das eine Anforderung zum Fernserver über einen ersten Kommunikationskanal sendet, um Zugang zu Inhalt anzufordern, wobei das erste Kommunikationsmodul ferner den Empfang des Inhalts vom Fernserver über den ersten Kommunikationskanal mit einer ersten Datenrate einleitet;
einen Prozessor (204), der kommunikativ mit dem ersten Kommunikationsmodul gekoppelt ist, ausgelegt zum Empfangen von Informationen, die anzeigen, dass der Inhalt über einen zweiten Kommunikationskanal unter Verwendung von unzugewiesener Bandbreite auf dem zweiten Kanal bereitgestellt wird, wobei der zweite Kommunikationskanal eine größere Bandbreite hat als der erste Kommunikationskanal; und
ein zweites Kommunikationsmodul (208), das kommunikativ mit dem Prozessor gekoppelt ist, der den Empfang des Inhalts über den zweiten Kommunikationskanal mit einer zweiten Datenrate vollendet, die höher ist als die erste Datenrate, wobei die Übertragung des Inhalts zum zweiten Kommunikationsmodul mit der zweiten Datenrate in einer kürzeren Zeitperiode erfolgt als die Übertragung des Inhalts mit der ersten Datenrate;
wobei der Prozessor zum Feststellen eines Vollendungsniveaus eines Herunterladens des gewählten Inhalts durch das Unterhaltungsgerät und zum Wählen der Fortsetzung des Herunterladens des gewählten Inhalts von dem ersten Kommunikationskanal auf der Basis des Vollendungsniveaus konfiguriert ist, und wobei der Prozessor den Inhalt zur Darstellung auf einem Darstellungsgerät ausgibt.

## Revendications

1. Procédé destiné à fournir un contenu à un dispositif de divertissement, le procédé comprenant :
recevoir une requête d'un dispositif de divertissement d'accéder à un contenu sur un premier canal de communication ;
déclencher une transmission du contenu au dispositif de divertissement sur le premier canal de communication à un premier débit de données ;
déterminer périodiquement si une largeur de bande non allouée existe pour transmettre le contenu sur un deuxième canal de communication, le deuxième canal de communication ayant une plus grande largeur de bande que le premier canal de communication ;
déclencher dynamiquement la transmission du contenu au dispositif de divertissement sur le deuxième canal de communication à un deuxième débit de données en utilisant la largeur de bande non allouée lorsqu'il est déterminé qu'il y a une largeur de bande non allouée, le deuxième débit de données transférant le contenu au dispositif de divertissement en une plus courte période de temps que le transfert du contenu au premier débit de données, dans lequel le dispositif de divertissement achève le télédéchargement du contenu sur le deuxième canal de communication ; et
continuer à transmettre le contenu sur le premier canal de communication lorsqu'il est déterminé qu'il n'y a pas de largeur de bande non allouée disponible ;
où le procédé comprend en outre le fait de déterminer un niveau d'achèvement d'un télédéchargement de la vidéo sélectionnée par le dispositif de divertissement, et sélectionner de continuer à télédécharger le contenu sélectionné du premier canal de communication sur la base du niveau d'achèvement.

2. Procédé selon la revendication 1, dans lequel le fait de déterminer un niveau d'achèvement d'un télédéchargement du contenu sélectionné par le dispositif de divertissement est basé sur le temps restant pour la transmission du contenu sur le premier réseau de communication et/ou la fiabilité du premier réseau de communication et du deuxième réseau de communication.

3. Procédé selon la revendication 1, dans lequel le fait de déterminer qu'il existe une largeur de bande non allouée pour transmettre le contenu sur un deuxième canal de communication, comprend en outre :
tabuler un nombre d'utilisateurs accédant au contenu sur le premier canal de communication sur la base de la requête ;
déterminer une priorité du contenu pour transmission sur le deuxième canal de communication sur la base du nombre d'utilisateurs accédant au contenu sur le premier canal de communication ; et
sélectionner le contenu pour transmission sur le deuxième canal de communication, en utilisant la largeur de bande non allouée, sur la base de la priorité du contenu.

4. Procédé selon la revendication 1, dans lequel le premier canal de communication fournit une diffusion point à point du contenu, et dans lequel le deuxième canal de communication fournit une diffusion générale du contenu, le premier canal étant fourni de préférence sur une connexion Internet et le deuxième canal étant fourni de préférence sur un système de diffusion par satellite.

5. Procédé selon la revendication 1, dans lequel :
le contenu est une vidéo sélectionnée parmi une pluralité de vidéos, le procédé comprenant en outre :
tabuler des votes pour la pluralité de vidéos sur la base de la requête d'accéder au contenu ;
allouer une partie de la largeur de bande non allouée du deuxième canal de communication pour transmission de la vidéo sélectionnée sur la base des votes ; et
déclencher la transmission de la vidéo sélectionnée sur le deuxième canal de communication.

6. Procédé selon la revendication 5, dans lequel le fait d'allouer la partie de la largeur de bande non allouée du deuxième canal de communication, comprend en outre :
mettre la vidéo sélectionnée en file d'attente pour fourniture sur le deuxième canal de communication sur la base d'une priorité de la vidéo sélectionnée, dans lequel la priorité est déterminée sur la base des votes pour la pluralité de vidéos ; et
allouer la partie de la largeur de bande du deuxième canal de communication à la vidéo sélectionnée sur la base de l'emplacement de la vidéo sélectionnée dans la file d'attente ; et dans lequel de préférence, allouer la partie de la largeur de bande du deuxième canal de communication, comprend en outre :
allouer la partie de la largeur de bande du deuxième canal de communication pour transmission de la vidéo sélectionnée en réponse à la détermination que la vidéo sélectionnée a reçu un plus grand nombre de votes que l'autre pluralité de vidéos.

7. Système comprenant :
un dispositif de divertissement (412, 414) qui génère une requête d'accéder à un contenu ;
un premier réseau de communication (410) couplé d'une manière communicante au dispositif de divertissement qui fournit un premier canal de communication ;
un deuxième réseau de communication couplé d'une manière communicante au dispositif de divertissement qui fournit un deuxième canal de communication, dans lequel le deuxième canal de communication a une plus grande largeur de bande que le premier canal de communication ; et
une source de contenu (104) couplée d'une manière communicante au dispositif de divertissement sur le premier et le deuxième canal de communication, arrangée pour :
recevoir la requête du dispositif de divertissement sur le premier canal de communication ;
déclencher la transmission du contenu au dispositif de divertissement par une diffusion point à point sur le premier canal de communication en réponse à la requête, à un premier débit de données ;
déterminer périodiquement s'il existe une largeur de bande non allouée sur le deuxième canal de communication ;
allouer dynamiquement une largeur de bande non allouée, lorsqu'il est déterminé qu'il y a une largeur de bande non allouée, pour transmettre le contenu sur le deuxième canal de communication à un deuxième débit ;
déclencher la transmission du contenu sur le deuxième canal de communication ; et
terminer la transmission du contenu sur le premier canal de communication;
dans lequel le dispositif de divertissement achève le télédéchargement du contenu sur le deuxième canal de communication, le deuxième débit de données transférant le contenu en une plus courte période de temps que le transfert du contenu au premier débit de données ; et
continuer à transmettre le contenu sur le premier canal de communication lorsqu'il est déterminé qu'il n'y a pas de largeur de bande non allouée disponible ;
la source de contenu étant en outre arrangée pour déterminer un niveau d'achèvement d'un télédéchargement du contenu sélectionné par le dispositif de divertissement, et pour sélectionner de continuer à télédécharger le contenu sélectionné du premier canal de communication sur la base du niveau d'achèvement.

8. Système selon la revendication 7, dans lequel la source de contenu :
tabule un nombre d'utilisateurs accédant au contenu sur le premier canal de communication sur la base de la requête, dans lequel le contenu est au moins l'un d'une pluralité de fichiers de contenu disponibles à l'accès ;
détermine une priorité du contenu pour transmission sur le deuxième canal de communication sur la base du nombre d'utilisateurs accédant au contenu sur le premier canal de communication ; et
alloue une largeur de bande non allouée du deuxième canal de communication pour transmission du contenu sur la base de la priorité.

9. Système selon la revendication 7, dans lequel le premier canal de communication est fourni sur une connexion Internet et le deuxième canal de communication est fourni sur un système de diffusion par satellite.

10. Appareil (104A) comprenant :
un support de stockage (302) qui stocke une pluralité de vidéos ;
un premier module de communication (306) qui reçoit une requête d'un dispositif de divertissement sur un premier canal de communication d'accéder à une vidéo sélectionnée de la pluralité de vidéos et qui déclenche la transmission de la vidéo sélectionnée au dispositif de divertissement sur le premier canal de communication à un premier débit de données ;
un processeur (304) couplé d'une manière communicante au premier module de communication qui tabule des votes pour la pluralité de vidéos sur la base de la requête et qui alloue une priorité pour la largeur de bande d'un deuxième canal de communication pour transmission de la vidéo sélectionnée sur la base des votes, dans lequel le deuxième canal de communication a une plus grande largeur de bande que le premier canal de communication et transmet la vidéo sélectionnée à un deuxième débit de données, le deuxième débit de données transférant la vidéo sélectionnée au dispositif de divertissement en une plus courte période de temps que le transfert du contenu au premier débit de données ; et
un deuxième module de communication (308) qui déclenche dynamiquement la transmission de la vidéo sélectionnée sur le deuxième canal de communication, en utilisant une largeur de bande non allouée, sur la base de la priorité ;
où l'appareil est configuré pour déterminer périodiquement s'il existe une largeur de bande non allouée sur le deuxième canal de communication ;
allouer dynamiquement une largeur de bande non allouée, lorsqu'il est déterminé qu'il y a une largeur de bande non allouée, pour transmettre le contenu sur le deuxième canal de communication à un deuxième débit ;
déclencher la transmission du contenu sur le deuxième canal de communication ; et
terminer la transmission du contenu sur le premier canal de communication;
en vertu de quoi le dispositif de divertissement termine le télédéchargement du contenu sur le deuxième canal de communication, le deuxième débit de données transférant le contenu en une plus courte période de temps que le transfert du contenu au premier débit de données ;
continuer à transmettre le contenu sur le premier canal de communication lorsqu'il est déterminé qu'il n'y a pas de largeur de bande non allouée disponible ; et
déterminer un niveau d'achèvement d'un télédéchargement du contenu sélectionné par le dispositif de divertissement, et sélectionner de continuer le télédéchargement du contenu sélectionné du premier canal de communication sur la base du niveau d'achèvement.

11. Appareil selon la revendication 10, dans lequel le processeur termine la transmission de la vidéo sélectionnée au dispositif de divertissement sur le premier canal de transmission en réponse au déclenchement de la transmission de la vidéo sélectionnée par le deuxième module de communication, dans lequel le dispositif de divertissement achève le télédéchargement de la vidéo sélectionnée sur le deuxième canal de communication.

12. Appareil selon la revendication 10, dans lequel le processeur met la vidéo sélectionnée en file d'attente pour fourniture sur le deuxième canal de communication sur la base de la priorité et alloue en outre la largeur de bande non allouée du deuxième canal de communication à la vidéo sélectionnée sur la base de l'emplacement de la vidéo sélectionnée dans la file d'attente ; et/ou
le processeur met la vidéo sélectionnée en file d'attente pour fourniture sur le deuxième canal de communication sur la base de la priorité et alloue en outre la partie de la largeur de bande du deuxième canal de communication à la vidéo sélectionnée en réponse à la détermination que la vidéo sélectionnée a reçu un plus grand nombre de votes que l'autre pluralité de vidéos.

13. Appareil selon la revendication 10, dans lequel le processeur fait expirer un vote pour la vidéo sélectionnée sur la base de la requête en réponse à l'achèvement de la transmission de la vidéo sélectionnée sur le premier canal de communication ; et/ou le processeur détermine un niveau d'achèvement d'un télédéchargement de la vidéo sélectionnée par le dispositif de divertissement et sélectionne en outre de continuer la transmission de la vidéo sélectionnée sur le premier canal de communication sur la base du niveau d'achèvement.

14. Procédé selon la revendication 1, dans lequel le fait de déclencher la transmission du contenu au dispositif de divertissement sur le deuxième canal de communication à un deuxième débit de données comprend en outre :
déclencher la transmission du contenu au deuxième débit de données qui est supérieur à une vitesse de présentation en temps réel du contenu.

15. Dispositif de divertissement (102A) comprenant :
un module d'interface (202) qui reçoit une entrée utilisateur demandant l'accès à un contenu disponible d'un serveur à distance ;
un premier module de communication (206) couplé d'une manière communicante au module d'interface qui transmet une requête au serveur à distance sur un premier canal de communication demandant l'accès au contenu, le premier module de communication déclenchant en outre la réception du contenu du serveur à distance sur le premier canal de communication à un premier débit de données ;
un processeur (204) couplé d'une manière communicante au premier module de communication arrangé pour recevoir des informations indiquant que le contenu sera fourni sur un deuxième canal de communication en utilisant une largeur de bande non allouée sur le deuxième canal, le deuxième canal de communication ayant une plus grande largeur de bande que le premier canal de communication ; et
un deuxième module de communication (208) couplé d'une manière communicante au processeur qui achève la réception du contenu sur le deuxième canal de communication à un deuxième débit de données qui est plus grand que le premier débit de données, le deuxième débit de données transférant le contenu au deuxième module de communication en une plus courte période de temps que le transfert du contenu au premier débit de données ;
dans lequel le processeur est configuré pour déterminer un niveau d'achèvement d'un télédéchargement du contenu sélectionné par le dispositif de divertissement, et pour sélectionner de continuer le télédéchargement du contenu sélectionné du premier canal de communication sur la base du niveau d'achèvement, et dans lequel le processeur sort le contenu pour présentation sur un dispositif de présentation.
